# EUROPEAN PATENT SPECIFICATION

(11) **EP 3 361 389 B1**
(45) Date of publication and mention of the grant of the patent: **31.08.2022**
(21) Application number: 18157702.4
(22) Date of filing: 29.01.2013
(51) Int. Cl.: G06F 13/38, H04L 49/90

(54) **TCP PROCESSING FOR DEVICES**
TCP-VERARBEITUNG FÜR VORRICHTUNGEN
TRAITEMENT TCP POUR DISPOSITIFS

(30) Priority: 16.10.2012 US 201261714405 P; 07.11.2012 US 201213671434
(43) Date of publication of application: 15.08.2018
(62) Divisional of application: 13153148.5
(73) Proprietor: Xilinx, Inc., San Jose, California 95124 (US)
(72) Inventor: POPE, Steve, Cambridge, CB1 3QJ (GB); RIDDOCH, David, Fenstanton, Cambridgeshire PE28 9JJ (GB)
(74) Representative: Style, Kelda Camilla Karen

(56) References cited:
- US-A1- 2004 249 881
- US-A1- 2008 008 205

## Description

### BACKGROUND OF THE INVENTION

This invention relates to a data processing system comprising a host computing device and a network interface device together configured to perform transport stream processing.

In typical computer systems, streaming protocols such as TCP are generally handled in software at a network protocol stack supported at the computer system. This is because handling streaming protocols is expensive to implement in hardware (e.g. at a network interface device) in terms of both processing power and memory requirements. For example, data is transmitted over TCP by encapsulating it in TCP segments that could be dropped, retransmitted and reordered, and as a result a stream of data may not arrive at the receiver in the correct sequence. Thus, TCP streams require that the protocol stack managing the streams can handle out of order packets (which requires a significant amount of storage) and both the receive and transmit paths of a given stream (because the receive and transmit paths of a TCP stream are not independent). It follows that implementing TCP processing in hardware requires significant logic and a large amount of buffer memory to handle out-of-order packets and retain transmitted packets in case retransmission is required.

Nevertheless, due to the potential improvements in latency offered by processing TCP streams at a NIC, network interface devices that can perform TCP processing in hardware at a TCP offload engine (TOE) have been developed. Examples include NICs based on the Chelsio T4 and Broadcom BCM5708C chips. Performing protocol processing at the NIC also opens up the possibility of performing upper layer protocol processing at the NIC so as to further minimise the latency associated with communicating upper layer messages over TCP. This is because the transport layer TCP protocol must generally be processed prior to any upper layer protocols - for example, TCP data packets received at a NIC must be correctly reassembled into an ordered stream so as to allow the payload data of those data packets to be re-formed and the upper layer messages extracted for processing by the upper layer protocol stack. Thus, if TCP processing is performed at a NIC, the upper layer protocol processing can also be moved into hardware at the NIC, and the latency associated with upper layer messaging can potentially be reduced.

However, incorporating both a TCP offload engine and an upper layer protocol accelerator in hardware at a network interface device requires even greater processing power and memory to be present at the NIC. This significantly increases the complexity and cost of the network interface device, especially since bespoke hardware solutions such as FPGAs (field programmable gate arrays) are typically used to provide upper layer message processing specific to a particular application. Furthermore, the complexity of an integrated hardware TCP and upper layer protocol solution generally results in long development times and, since the hardware implementing the TCP offload engine and accelerator cannot generally be reconfigured with the same ease with which an updated software transport library can be installed into a host computer system, it is much more difficult to make changes to a hardware implementation (e.g. to fix bugs).

There is therefore a need for a host computer system and network interface device that can support low latency messaging over an upper layer protocol without requiring the complexity and expense of a TCP offload engine in hardware.

US 2004/0249881 A1 discloses a method and apparatus for transmitting commands between a TCP stack and an offload unit and for communicating receive and transmit data buffer locations.

### SUMMARY OF THE INVENTION

The invention is set out in the appended set of claims. The dependent claims set out particular embodiments.

According to a first example there is provided a data processing system comprising:
a host processing device supporting a host transport engine operable to establish one or more transport streams over a network with a remote peer, the host transport engine maintaining state for each transport stream; and
device hardware comprising:
   a device application; and
   a device transport engine operable to perform transport processing of a transport stream on behalf of the device application;
wherein the host transport engine is configured to, on establishing a first transport stream for termination at the device application, pass sufficient state to the device transport engine so as to permit the device transport engine to perform transport processing of the first transport stream.

According to a first aspect of the present invention there is provided a network interface device configured to interface between a network and a host computing device, the network interface device comprising:
a physical layer signalling unit for connection to a network;
a device application configured to terminate a first transport stream, such that payload data of the first transport stream either originates, or is consumed by, the device application; and
a device transport engine in hardware coupled to a network by the physical layer signalling unit and configured to perform transport processing of the first transport stream on behalf of the device application in response to receiving a message, from a host transport engine of the host computing device, indicating that the device transport engine is permitted to perform processing of the first transport stream, the message comprising transport stream state sufficient to allow the device transport engine to perform transport processing of the first transport stream.

According to a second aspect of the present invention there is provided a method of performing transport protocol processing at a pair of transport engines comprising:
in software at a host transport engine:
   establishing a transport stream over a network with a remote peer;
   forming state information for the transport stream; and
   passing sufficient state information for the transport stream to a device transport engine so as to permit the device transport engine to perform transport processing of the transport stream;
and in hardware of a network interface device at the device transport engine:
   performing transport processing of the transport stream on behalf of a device application provided at the hardware of the network interface device.

### DESCRIPTION OF THE DRAWINGS

The present invention will now be described by way of example with reference to the accompanying drawings, in which:
Figure 1 is a schematic diagram of a data processing system configured in accordance with a first embodiment of the present invention.
Figure 2 is a schematic diagram of a data processing system configured in accordance with a second embodiment of the present invention.

### DETAILED DESCRIPTION OF THE DRAWINGS

The following description is presented to enable any person skilled in the art to make and use the invention, and is provided in the context of a particular application. Various modifications to the disclosed embodiments will be readily apparent to those skilled in the art.

Broadly speaking, the present invention relates to a device transport engine configured to perform critical path transport protocol processing on behalf of one or more applications local to the transport engine and under the control of a full transport protocol stack supported at a host computing device.

A host computing device could be any kind of computing device, including: a server, a personal computer, a switch, a router, a bridge, and a portable device such as a tablet computer or smartphone. The host computing device supports a software environment such as an operating system that in turn supports one or more applications. The operating system could itself be part of a virtualised system comprising one or more guest operating systems supported by a privileged software domain, such as a hypervisor. A network interface device could be any hardware device configured to interface a wired or wireless network to a host computing device. The network interface device could be provided in any manner between a network and a host device, including: as one or more peripheral devices (such as a PCIe card) of a host computing device, and/or as an integral part of a host computing device (e.g. a LAN on mainboard, or LOM chipset).

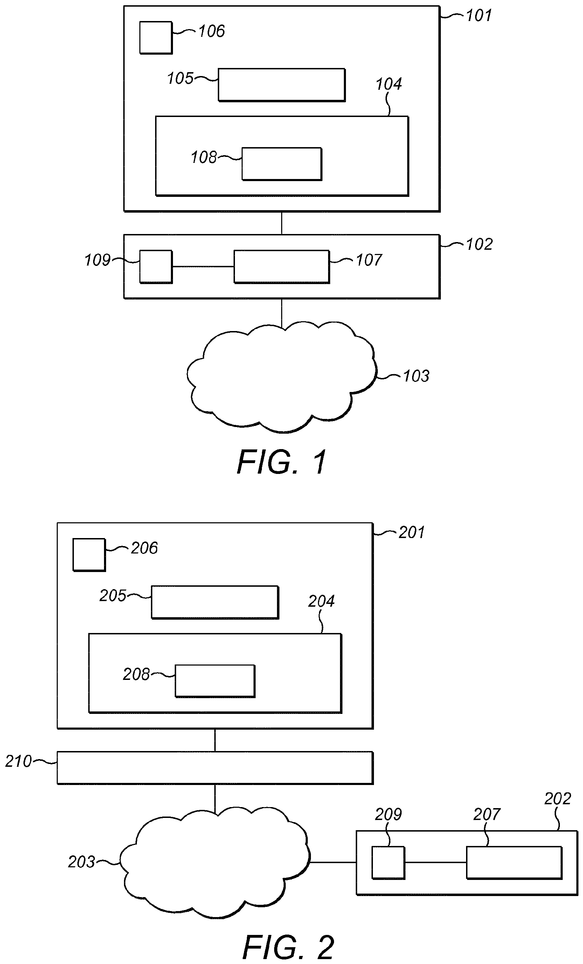

A data processing system configured in accordance with a first embodiment of the present invention is shown in figure 1. The data processing system 100 comprises a host computing device 101 coupled to a network interface device 102 that is arranged to interface the host to network 103. The host computing device includes a host transport engine 105, which would typically be a software network protocol stack supported at an operating system 104. In figure 1 the host transport engine is a network stack at user level along with application 106, but alternatively the host transport engine could be provided at the operating system and operate in the kernel context. The operating system could be a conventional monolithic operating system, a privileged domain (e.g. a hypervisor) supporting one or more virtualised operating systems, or a virtualised operating system itself. There could therefore be multiple software environments at the host computing device.

The host transport engine is operable to process application layer messages so as to encapsulate each message in data packets in accordance with a transport stream protocol such as TCP. The host transport engine would typically also perform protocol processing according to one or more additional protocols. For example, if NIC 102 is an Ethernet NIC, the engine could be configured to form data packets in accordance with TCP, network layer internet protocol (IP) and link layer Ethernet (IEEE 802.3) so as to form data packets having a nested set of protocol headers as follows:
[ Ethernet [ IP [ TCP <payload data> ]]]
where transport layer TCP is carried within an IP packet which is carried within an Ethernet packet. It is well known in the art to perform link (e.g. Ethernet) and network layer (e.g. IP) protocol processing at either a host device or a NIC and this will not be discussed further. There may also be additional protocol layers above the transport layer - for example, quality of service protocol layers - and these can also be handled according to any suitable manner in the art, but would preferably be handled at the host device, such as at host transport engine 105 or at an application..

The host transport engine is shown in figure 1 as a single homogeneous unit but could in fact be a collection of multiple processing entities located in hardware (e.g. at a NIC or other peripheral device), and/or at the operating system (e.g. running in the kernel context), and/or at user level (e.g. at a user level transport library). The host transport engine could additionally be capable of handling data flows in accordance with any number of other connected-oriented or connectionless protocols.

As is conventional, application 106 at the host computing device can transmit data over network 103 by means of the host transport engine by passing messages to the host transport engine for transmission in accordance with the transport stream protocol. Typically those messages will be configured in accordance with an application layer protocol such as HTTP (e.g. in the case of data from a web server running at the host) or IMAP (e.g. in the case of data from an email server running at the host).

In the first embodiment of the present invention, a further transport engine is provided in the form of a device transport engine 107 that is coupled to the host transport engine and configured to receive and/or transmit data over transport streams on behalf of a device application 109. Device application 109 is configured to consume and/or produce application data communicated over transport streams and is located in hardware close to the device transport engine.

Device transport engine 107 is configured to transmit and/or receive application data of the device application over transport streams by performing limited transport stream processing in dependence on state passed to it from host transport engine 105. Unlike the host transport engine, the device transport engine is not configured to perform full transport layer protocol processing and control of the transport streams handled by the device transport engine remains with the host transport engine. For example, in the case in which the transport streams are TCP streams, the host transport engine maintains the TCP control block for a stream but passes sufficient state information to the device transport engine to allow the device transport engine to perform limited transmission or reception of data over that TCP stream. The division of transport processing between the host and device transport engines is described in more detail below for packet transmission and reception. Device transport engine would typically be controlled by means of a driver 108 at the operating system of the host device (which could be the driver of the NIC). Device application 109 and device transport engine 107 are provided at network interface 102 (as shown in figure 1). In alternative embodiments that are not covered by the subject-matter of the claims, one or both of the device application and device transport engine could be embodied (separately or together) in other hardware of the data processing system. For example, both the device application and device transport engine could be provided at an FPGA of the network interface device, or the device transport engine 107 could be an FPGA supported at the network interface device and the device application could be embodied in an FPGA supported at a peripheral device of the system.

Typically, device application 109 is configured to form or consume application layer messages in accordance with an upper layer protocol. The payload data of the messages could be generated at the device application, perhaps in response to receiving information from network 103 or host computing device 101. For example, device application 109 could be a trading algorithm embodied in an FPGA of NIC 102 and configured to receive one or more feeds from electronic financial exchanges over network 103. In response the trading algorithm could generate trades or normalised feed data from the received financial data for encapsulation in application layer FIX messages and transmitted over a transport data stream by means of device transport engine 107.

In the first embodiment of the present invention, the host transport engine and device transport engine are local to one another at data processing system 101.

A second embodiment of the present invention is shown in figure 2 in which device transport engine 207 is accessible to host transport engine 205 over a network 203. Host transport engine 205 is supported at a host computing device 201 that is coupled to network 203 by its local network interface device 210 (which could be a conventional NIC with no offload capabilities). NIC 210 allows the host transport engine to communicate data over network 203 and hence to network entity 202 which supports the device transport engine 207. As in the first embodiment, device transport engine 207 is permitted to communicate data over transport streams that are managed by host transport engine 205. The division of transport processing between the host and device transport engines is described in more detail below for packet transmission and reception.

Network entity 202 further includes device application 209 at which application layer data is formed or consumed and on behalf of which the device transport engine is configured to communicate data over the transport streams of the host transport engine. The network entity could be any kind of data processing device, such as a network interface device of another server, but it is particularly advantageous if the entity is a network switch or other packet control apparatus. This allows the host to permit the switch to perform critical path processing and locally handle communications over certain data streams. For example, the switch could be configured to process at its device application 209 data received on a first incoming transport stream controlled by the host device and push the processed data out over a second transport stream based on permissions received at device transport engine 207 of the switch from the host device. In most cases the data would not therefore traverse the host device, which is remote to the switch and which would typically comprise a relatively high-latency software host transport engine for performing transport protocol processing. The data streams could be financial data feeds with the switch being configured to perform normalisation of the financial data at an FPGA device application. When the network entity is a switch, the switch can be readily configured to intercept packets that are addressed to the host. In other cases, the routing systems of the network would be configured so as to deliver data packets belonging to a transport stream that has been passed off to the network entity to that network entity.

By providing a device transport engine in hardware close to the network at which critical path transport processing can be performed, the split transport processing architecture described herein provides a low latency communication path for device applications that are configured to consume or generate data in hardware and which are not therefore close to a host transport engine such as a software network protocol stack. Furthermore, because the complexities of the transport protocol are handled at the host transport engine, the device transport engine can be relatively lightweight and straightforward to implement in a reconfigurable logic device such as an FPGA. The split transport processing architecture does not therefore suffer from the high cost of development and implementation suffered by, for example, full TCP offload engines (TOE) that are known in the art. In the case that the transport streams are TCP streams, connection management, packet re-transmission and packet re-ordering would preferably be performed at the host transport engine at which the required facilities for packet buffering are provided.

Since the payload data for the transport streams originates at and/or is consumed by device application 109 or 209, the device application can be considered to terminate the transport streams. Thus the transport streams can be managed remotely from the device(s) supporting both the application at which those streams can be considered to terminate and the device transport engine at which critical path transport processing is performed. This is to be contrasted with a TOE NIC device in which the application terminating a TCP stream is located in software on the host, with the NIC performing full TCP processing in hardware such that payload data must be passed between the host software and NIC.

Note that a device transport engine as taught herein could be configured to handle one or both of the transmit and receive path of a transport stream. For example, received data could be consumed in software at the host (e.g. at application 106 or 206) while transmitted data could be generated and sent by the device (e.g. generated at device application 109 or 209 and sent by device transport engine 107 or 207). This is possible because the host transport engine remains in control of the transport data streams over which data is transmitted or received. Certain applications might only require a device transport engine to handle the transmit or receive path in which case the device transport engine can be implemented with fewer resources, reducing development time and the complexity of the device.

The division of transport processing between the host and device transport engines in accordance with the split transport processing architecture will now be described in more detail with respect to the transmission and reception of data. In the following the host computing device 101/201 will be referred to as the "host", and the device at which the device(s) 102/202 transport engine and device application are supported will be referred to as the "device".

Once a connection has been established by the host transport engine, the host transport engine is configured to pass sufficient state to the device transport engine to allow the device transport engine to perform transmission and/or reception of data packets over a predetermined set of data streams. For a TCP/IP stream, the host transport engine might pass to the device transport engine the following state in order to migrate a TCP/IP stream to the device transport engine:
- local and remote IP addresses, and TCP port numbers;
- a VLAN identifier;
and if the device is to handle the receive path:
- sequence number of the next expected received transport packet;
and if the device is to handle the transmit path:
- a MAC address associated with the remote IP address;
- sequence number of the next transport packet to be sent;
- the maximum sequence number that the device transport engine is permitted to transmit.

Further state could include TCP stream options, such as maximum segment size.

The host transport engine could further indicate to the device transport engine both or one of the transmit and receive paths of a transport stream are to be handled at the device transport engine.

With regard to the receive path, the device transport engine is configured to use the transport stream state provided to it by the host transport engine to allow it to extract payload data from the data packets of one or more identified transport streams on behalf of a device application supported in local hardware. In the manner set out above, the state passed from the host transport engine indicates to the device transport engine the transport streams that are to be processed. For example, each received TCP/IP packet would typically include an identifier of the stream (e.g. local and remote IP addresses, TCP port numbers and possibly VLAN identifier) and a sequence number that identifies the position of the packet in the stream sequence. This information is held in the headers of a data packet and can be readily read from each data packet using simple logic.

When the host transport engine passes responsibility for receiving data packets to the device transport engine it sends to the device transport engine the sequence number of the first data packet that it is expected to handle. The device transport engine could then attempt to handle all data packets subsequently received over those streams until instructed otherwise by the host transport engine, or the host transport engine could instruct the device transport engine to handle, for example, data packets having sequence numbers within a predetermined receive window, a specified amount of payload data, or for a specified period of time.

On receiving a data packet belonging to the one or more identified transport streams, the device transport engine attempts to extract the transport payload and pass the extracted payload to the device application consumer. If the device transport engine successfully extracts the payload, it passes at least some header information (including the sequence number) of the data packet to the host transport engine in a packet-received message in order to inform the host transport engine that the data packet has been successfully processed at the device transport engine. In response the host transport engine updates the state it maintains for the transport stream. Preferably the packet-received message includes the headers of the received data packet (e.g. the full header block) to the host transport engine so as to allow the host to perform transport processing with minimal modification by arranging that the host transport device process the headers as though the payload data were present. Data packets received at the device transport engine that belong to transport streams that are not to be processed at the device transport engine are forwarded on to the host transport engine and processed at the host in the normal manner.

The device transport engine can be configured to establish whether a received data packet belongs to an identified transport stream by using identifiers from the packet header to perform a lookup into a data structure maintained at the network interface device identifying which transport streams are to be processed by the device transport engine.

The host transport engine is configured to perform negotiation of new connections and retains control over the transport streams that are to be processed at the device transport engine. The host transport engine is further arranged to perform any resource-intensive transport processing, such as packet re-ordering or retransmission which requires a transport engine to maintain a significant size of packet buffers. The device transport engine is configured to perform only critical path processing, which includes those steps required to extract payload data from transport packets received in sequence. Since, especially in latency critical scenarios packets are typically received in sequence, the device transport engine is enabled to perform transport processing of most received data packets belonging to an identified stream and hence allows transport processing to be performed with limited resources locally to the device application consumer.

In the event that the device transport engine cannot successfully process a received data packet, the data packet is forwarded to the host transport engine for transport processing. This would be the case, for example, if a data packet is received out of sequence, if the data packet is corrupted, or if any other error condition is raised at the device transport engine.

In order to keep transport processing of streams handled at the device as close to the device as possible, the host transport engine is preferably configured to, on receiving a payload-received message from the device that indicates a sequence range immediately prior to some of the buffered segments at the host, transmit the buffered segments back to the device transport engine. In other words: the device has received a missing segment and the out-of-order segments buffered at the host after being forwarded from the device can now be passed back to the device for processing in sequence.

The host transport engine sends ACKs in response to full data packets that it processes (e.g. forwarded packets including payload). The host transport engine is preferably further configured to cause the device to transmit ACKs in response to packets that are processed at the device. For example, the host transport engine could pass an ACK packet to the device for forwarding from the device on the host transport engine having successfully processed the payload-received message. Alternatively, the host transport engine could transmit a message to the device to cause the device transport engine to generate and transmit an ACK packet on the host transport engine having successfully processed the payload-received message. If the device transport engine is handling the transmit path of a stream in respect of which an ACK is to be sent, the device transport engine would as required (e.g. for TCP) write the sequence number of the next packet (snd_nxt as described below) into the sequence number field of the ACK packet header.

By way of example only, the following steps could be performed on receiving a data packet over a transport stream that is to be processed at the device transport engine:
1. If any of the following are true, forward the packet to the host transport engine:
   a. the packet is out of sequence;
   b. the packet does not have any payload;
   c. in the case of TCP packets, SYN or RST flags are set;
2. Validation of the packet checksums (e.g. TCP and IP checksums). If validation fails, the packet is discarded or forwarded to the host transport engine.
3. The remaining data packets are processed at the device transport engine by:
   a. updating the sequence number maintained at the device transport engine identifying the next expected sequence number;
   b. forwarding the transport payload to the device application consumer together with an indication of the transport stream to which the payload data relates;
   c. forwarding an indication to the host transport engine that the data packet has been successfully processed at the device transport engine - preferably the indication comprises the headers of the data packet.

Steps 1 and 2 would preferably be performed at a network interface device supported at the device transport engine, with the device transport engine being specifically configured to perform the transport processing of step 3. Typically the packet filtering logic of a NIC could be readily configured to perform step 1. The NIC would preferably also perform any packet lookup steps required to determine whether a packet is to be processed at the host or at the device transport engine.

Since the consumer of the application data is the device application in hardware local to the device transport engine, it is advantageous if the host transport engine is configured to handle out of order packets by performing packet re-ordering and, once the packets are available in the correct sequence, rather than performing transport processing at the host transport engine, re-transmitting the packets over the data stream such that the packets are correctly received in order at the device transport engine. Re-ordering the packets might involve the host transport engine requesting retransmission of any missing packets.

Typically the payload of the transport data packets would comprise upper layer protocol messages carrying the data for consumption at the device application, with the device application being arranged to perform upper layer protocol processing of the upper layer messages. For example, if the transport streams consumed at the device application are financial data feeds the upper layer messages could be FIX messages.

The host transport engine performs processing of packets forwarded to it in the normal manner. Messages from the device transport engine that include at least some of the headers of data packets received and processed at the device transport engine are processed at the host transport engine as if the payload were present. This ensures that the state maintained at the host transport engine stays up to date.

As is known in the art, sufficient processing of the protocol layers below the transport layer (e.g. Ethernet and IP layers) is performed at the device transport engine to allow the engine to extract the transport payload without the data packets having to traverse a protocol stack at the host device. Typically the protocol processing of lower layers would include, for example, checking or calculating checksums, or performing encryption/decryption (e.g. in the case of IPSEC packets). Such steps could be performed at a network interface device at which the device transport engine is supported or at the device transport engine itself.

In the first embodiment of the invention in which the device transport engine 107 is local to the host 101, data may be communicated between the host and device transport engines over the data buses/interconnects of the data processing system at which the transport engines are provided. In the second embodiment of the invention in which the device transport engine 207 is remote from the host 201, data is communicated between the host and device transport engines over network 203 encapsulated within data packets formatted in accordance with the protocols in use over the network.

It is often a relatively frequent occurrence that packets are subject to minor re-ordering as they are carried over a network. It can therefore be advantageous to provide the device transport engine (or the device at which it is supported) with enough buffer space to perform re-ordering of a small number of data packets. This allows the device transport engine to handle minor packet re-ordering and avoids the potentially significant increase in latency due to the out-of-order packets being forwarded to the host transport engine. If the re-order buffer at the device becomes full or the device transport engine cannot successfully re-order the packet held in the buffer, then the packets are forwarded to the host as described above. The re-order buffer could be the maximum segment size of a transport stream (which for transport packets carried over Ethernet would typically be 1.5kB). The re-order buffer would preferably be sufficiently large to hold several data packets of the maximum segment size (e.g. 2 or more and preferably 5 or more). This would require a buffer size of no more than a few kB.

The device application would typically be located in hardware close to the network so as to minimise the latency of communications to/from the application. It is therefore advantageous if steps are taken to minimise the latency associated with the transport processing performed by the device transport engine. One such improvement over conventional receive architecture is to configure the device transport engine to forward the transport payload irrespective of whether validation of the packet checksum(s) is complete (i.e. the payload could be forwarded before checksum validation completes). This receive cut-through reduces latency and requires less buffer space at the device transport engine or network device at which it is supported since transport packets intended for the device application can be streamed onto the device application without having to wait for the completion of checksum validation (which would typically only complete once at least the entire payload has been received).

The device transport engine is configured to signal to the device application consumer whether or not the packet checksum(s) have been successfully verified and the device application is arranged to discard the received payload data (including the results of any processing performed on that data) on receiving an indication that the checksum(s) of the respective transport packet are found to be incorrect. The device transport engine is preferably configured to signal to the device application only in the event that a checksum is found to be incorrect. In situations in which the importance of low latency outweighs the possibility of the device application processing bad data, it can be advantageous for the device application to be arranged not to discard the received payload data and to continue processing without interruption.

With regard to the transmit path, the device transport engine is configured to use the state provided to it by the host transport engine to encapsulate application data from the device application within transport data packets for transmission over the transport streams identified to it by the host transport engine. For example, in the case of a TCP/IP stream, the state would typically include as well as the identifiers of a data stream, at least a sequence number (snd_nxt) of the next packet to be sent by the device transport engine and a maximum sequence number (snd_max) that the device transport engine is permitted to transmit. Preferably the host transport engine is configured to send updated state to the device transport engine when the maximum sequence number snd_max changes so as to allow the device transport engine to continue to transmit over the data stream. The host transport device can be configured to calculate the state for the device in the usual manner from the receive and congestion window parameters:
snd_max = snd_nxt + min(peer_receive_window, congestion_window)

The device transport engine maintains state at least defining the next sequence number to be transmitted by the device over each stream. This value is increased each time a data packet is sent over the respective transport stream.

By way of example only, the following steps could be performed on the transmit path when the device application has data to transmit over a transport stream by means of the device transport engine:
1. The device application generates transport payload and passes it to the device transport engine along with an indication of the stream over which it is to be transmitted.
2. The device transport engine buffers the payload until the end of the application message or until sufficient payload is available for a data packet of the maximum segment size. This requires minimal buffer resources at the device. A checksum is calculated over the payload, preferably as the payload streams into the buffer.
3. The transport protocol headers are formed/completed for the data packet. This includes writing into the headers the sequence number of the data packet from the state held at the device defining the sequence number of the next packet to be transmitted, along with the transport checksum.
4. The transport packet is completed by forming the headers of the lower protocol layers. This step could be performed by the device transport engine but would preferably be performed at a network interface device supporting the device transport engine, typically by streaming the packet out to the MAC of the network interface device.
5. A copy of the data packet is forwarded to the host transport engine for storing in a buffer (e.g. a retransmit queue).

This last step ensures that the host transport engine retains a copy of the data packet until it is acknowledged by the remote endpoint of the stream to which the packet is sent. If the transport protocol requires retransmission of the data packet, the host transport engine then has a copy of the data packet to send out. The device transport engine is configured to ignore retransmission requests received over the data stream since these are handled at the host.

It can be advantageous to omit step 2 above in the case that the device application is arranged to supply the payload data checksum to the device transport engine along with the payload for the transport packet. For many applications, the payload data will consist of an application message having a known format for which many of the fields are known prior to the device application performing significant processing. It can therefore be advantageous if the device application is configured to partially calculate the transport checksum over the parts of the payload that are initially known. Once the device application has performed its processing and fully formed its message for transmission, the device application then updates the checksum according to the newly-completed parts of the message. By performing checksum processing in this manner the device transport engine need not buffer the message prior to its transmission in order to calculate the transport checksum over the payload data. The resources required at the device transport engine are therefore reduced and transport packets can be sent out at lower latency since there is no need to halt the transmission of a packet in order to calculate the transport checksum.

The above transmit cut-through arrangement is particularly useful in situations in which the device application is required to form only one or two values for an application message. For example, the device application could be a financial trading engine configured to place trades on a security. The device application could therefore have prepared one or more message templates that contain much of the information required to place a trade at a remote exchange (such as identifiers of the trading engine and the security, and the structure of the message). On the device application then receiving information indicating that a trade should be placed, the device application would calculate values for (e.g.) the volume and price for the trade which would be inserted into the message template prior to passing the message to the device transport engine.

Preferably the device application is configured to supply payload data/application messages that do not exceed the maximum transmit segment size of the data stream.

It can be advantageous if the host transport engine is configured to pass template data packets to the device transport engine into which the upper layer message payload can be inserted. The device transport engine completes the templates in dependence on the payload data passed to it by the device application and the protocol state held at the device. The host transport engine would preferably be configured to transmit a single template packet when the host passes the state required for a stream to the device. Alternatively, the host could pass a template for each data packet to be transmitted by the device transport engine. The packet template would preferably include the information necessary to form lower layer protocol headers, such as (for a TCP/IP/Ethernet data packet) Ethernet MAC address, VLAN-ids, IP addresses and IP IDs. If a template as such is not passed to the device transport engine, the information required for a data packet will be available to the device in the state passed to it by the host transport engine.

State relating to transmit flow control is preferably maintained by the host transport engine that manages the data stream in dependence on the remote endpoint's TCP receive window (i.e. whether the endpoint can receive data packets over the stream) and enforcement of congestion control algorithms. This avoids unnecessary complexity at the device which need only understand the maximum permitted sequence number passed to it by the host. Alternatively the device transport engine could be configured to perform basic transmit flow control and maintain parameters identifying, in the case of a TCP stream for example, the TCP receive window, congestion window, and an indication of the number of data packets the device transport engine is authorised to transmit (i.e. maximum sequence number - next sequence number). Analogous parameters exist for other transport protocols. Preferably the device transport engine is arranged to provide an interface that exposes this state information to the host transport engine so as to allow the host to maintain visibility over all state relating to the transport streams it is managing.

It is advantageous if in the event the device application passes payload data to the device transport engine which, if transmitted over the data stream, would cause the device transport engine to exceed the maximum permitted sequence number, the device transport engine is configured to form those transport packets but forward those packets to the host transport engine rather than over the data stream to the intended remote endpoint. The host transport engine can then transmit the data packet as and when the remote receive window and/or congestion window opens sufficiently.

As is known in the art, the device transport engine or preferably the network device (e.g. at a MAC or other layer 2 processing unit of a NIC) at which it is supported is further configured to perform processing of protocol layers below the transport layer so as to allow the device transport engine to transmit data packets without the application data being required to traverse the host.

The device application and device transport engine could be configured to combine the cut-through receive and transmit paths described above so as to provide a low-latency cut-through for upper layer messages that are for forwarding between transport streams. In order to achieve forwarding cut-through, the device transport engine is configured to, on receiving a data packet for forwarding, update the transport checksum of the packet so as to subtract the contribution from the header, leaving a checksum over just the payload of the data packet. This can be performed at low latency since the headers of the data packet which carry the transport checksum are received first. The payload checksum is then passed along with the payload directly to the transmit path of the device transport engine in accordance with the transmit cut-through arrangement. The received data packet can therefore be streamed directly onto the transmit path without the data packet being required to be held at a buffer whilst its checksum is verified. Note that it need not be known when the packet starts to be streamed on to the transmit path whether the checksum is correct.

In accordance with the receive cut-through arrangement, the device transport engine completes validation of the transport checksum once the entire payload has been received. If validation of the checksum fails then the device transport engine signals to the transmit path to abort the transmit operation - this can be achieved by the device application passing the signal indicating that checksum validation has failed from the receive path to the transmit path logic of the device transport engine; alternatively, the receive path logic of the device transport engine could be configured to signal directly to the transmit path logic of the device transport engine. If the packet has already been partially written onto the wire then the packet is poisoned by writing a bad CRC onto the end of the data packet.

The receive path of the device transport engine passes a payload-received message to the host transport engine in the manner described above in relation to the reception of data packets, and the transmit path of the device transport engine forwards a copy of the forwarded data packet to the host transport engine in the manner described above in relation to the transmit of data packets.

Since the receive path of the device transport engine is directed to the device application and the transmit path of the device transport engine originates at the device application, it would typically be straightforward to arrange that data packets for forwarding are streamed via the device application. This allows the device application to perform packet inspection and/or validation functions while adding minimal latency. If the device application modifies the payload it updates the payload checksum so as to reflect the changes so that the transmit path receives the correct checksum with the payload for forwarding.

A device transport engine 107/207 of the present invention could be provided as a field programmable gate array (FPGA) at or connected to a network device such as a network interface device 102 or a switch 202. Such an FPGA would preferably be located between the network and the controller logic of the network interface device and switch such that packets received from the network first pass through the FPGA. This allows the FPGA to intercept any data packets for which it is to perform transport processing.

The host transport engine is responsible for maintaining most of the state associated with each stream, with any state held at the device transport engine (e.g. the sequence number of the next packet for transmission or reception over a transport stream handled at the device) being passed to the host transport engine so as to ensure the host remains in control of all of the transport streams handled at the device. The host transport engine can pull back transport streams being handled at the device through appropriate signalling to the device transport engine.

The device and host transport engines are configured so as to allow the host transport engine to generally perform transport processing in the normal manner. Thus:
- packets forwarded to the host transport engine by the device transport engine are processed as normal;
- the device transport engine is configured to send a payload-received message to the host transport engine on successfully performing transport processing on a received data packet, the message includes sufficient header information from the received data packet so as to allow the host to process packet headers as though the payload were present (preferably the headers of the received data packet are simply forwarded to the host transport engine in the message and the host discards the message once processed);
- in dependence on the state it holds for the transport streams, the host transport engine calculates the snd_max parameter for each transport stream handled at the device, snd_max indicating the highest sequence number the device is permitted to transmit over the respective stream.

The host transport engine further maintains the usual support structures, such as timers for supporting, for example, delayed acknowledgements, retransmit timeout, zero-window probes, keep-alive probes. If the MAC address associated with the remote endpoint of a stream changes, the host transport engine updates the remote MAC stored at the device for that stream (which would have been passed to the device when stream processing was passed to the device from the host). Preferably a single predetermined message type is used to convey messages between the host and device transport engines. These messages (e.g. ACK templates and messages carrying control or transport stream state information) would typically be carried on a data stream established between the host and device: if the host and device are remote to one another this would be a network stream; if the host and device are coupled to one another by means of a bus or interconnect, the messages would be communicated according to the bus/interconnect architecture.

By way of example, in the case of TCP the host transmit engine would handle data packets in much the normal way:
- packets that acknowledge new data (ACKs) would typically cause packets stored in the retransmit queue to be freed;
- packets that acknowledge new data (ACKs) would typically cause the congestion window of a stream to be increased;
- duplicate acknowledgements (ACKs) would typically cause packets stored in the retransmit queue to be retransmitted according to the "fast retransmit" algorithm;
- packets with payload that fails a sequence check could be buffered (if out-of-order but in-window) or discarded (if out-of-window);
- packets that update the remote peer's receive window cause that update to be reflected in the TCP state;
- packets with the RST flag set may cause the TCP connection to be aborted;
- packets may cause timers to be started, modified or stopped.

A first exemplary implementation of the split transport processing architecture shown in the figures will now be described. Host computing device 101/201 supports a financial application 106/206 configured to interact with a remote electronic exchange that is arranged to provide one or more TCP streams carrying financial data feeds. The host computing device 101/201 communicates over network 103/203 by means of host transport engine 105/205 and network interface device 102/210. Financial application is configured to manage related device application 109/209 which is embodied on an FPGA at network device 102/202.

Financial application 106 is arranged to select a trading strategy for execution at the device application in dependence on the financial data feeds received over the TCP streams. The application configures related device application 109/209 to place trades at the electronic exchange over the one or more TCP streams under the control of a set of trading algorithms configured to effect the selected trading strategy. Device application 109/209 is therefore a consumer of the financial data feeds to which in response it generates trading messages.

In order for the transport processing of packets carrying data for consumption at or generated by the device application to be performed close to the device application, the device is provided with a device transport engine 107/207 that is configured to perform critical path TCP processing under the control of host transport engine 105/205. The host transport engine passes the transport streams over which the financial data is received and the transport streams over which trades are to be transmitted to the device transport engine in accordance with the mechanisms described herein. Thus, the device transport engine performs receive processing on the data streams carrying the financial data feeds so as to extract the payload financial messages for the device application, and it performs transmit processing on the trading messages generated at the device application in order to form transport data packets for transmission over the data streams terminating at a remote financial exchange.

In this example, device transport engine 107/207 is embodied at an FPGA, which could be the same FPGA at which the device application is supported. This allows the trades performed by the device application to be generated at very low latency in response to the incoming financial data feeds. The device application consuming the financial feeds could be separate to the device application generating the trades, the two device applications both being embodied at an FPGA of the device and in communication with one other or by means of a common memory. Since the device transport engine is provided at a network interface card 102 of the host processing device 101 as shown in figure 1, the device transport engine is preferably located between the controller of the NIC (not shown) and the network 103 such that network traffic received at the host first passes through the device transport engine (which could, for example, be an FPGA having one or more MACs for interfacing with the NIC controller and a PHY of the NIC connected directly to the network). This arrangement allows the device transport engine to intercept data packets received over transport streams handed off to the device transport engine. Similarly, in relation to figure 2, when the device transport engine is provided at a switch, the device transport engine is preferably located between the switch controller and network such that network traffic received at the switch first passes through the device transport engine. Again, this arrangement allows the device transport engine to intercept data packets received over transport streams handed off to the device transport engine without requiring the routing of data packets on the network to be updated in order to direct to the device transport engine transport streams handed off to the device transport engine.

In embodiments in which the device transport engine is provided at a network device such as a network interface device or switch, the device transport engine is preferably coupled to the network by means of a physical layer signalling unit (a PHY) configured to perform the physical signalling of data packets over the network. The device transport engine is preferably provided with one or more layer 2 processing units (e.g. MACs) by means of which it interfaces with a PHY on the network side and, on the host side, a controller of the NIC or switch.

A device transport engine preferably cannot establish new transport streams.

In alternative unclaimed embodiments, the device need not be a network device such as a NIC or switch but could be hardware coupled to such a network device. For example, the device application and device transport engine could be provided together or separately on one or more peripheral cards of a data processing system that are coupled to a NIC by means of a system bus or other interconnect.

## Claims

1. A network interface device (102) configured to interface between a network and a host computing device, the network interface device comprising:
a physical layer signalling unit for connection to a network (103);
a device application (109) configured to terminate a first transport stream, such that payload data of the first transport stream either originates, or is consumed by, the device application; and
a device transport engine (107) in hardware coupled to the network (103) by the physical layer signalling unit and configured to perform transport processing of the first transport stream on behalf of the device application (109) in response to receiving a message, from a host transport engine of the host computing device, indicating that the device transport engine (107) is permitted to perform transport processing of the first transport stream, the message comprising transport stream state sufficient to allow the device transport engine (107) to perform transport processing of the first transport stream.

2. A network interface device as claimed in claim 1, wherein the device application and device transport engine are embodied at one or more reconfigurable logic devices.

3. A network interface device as claimed in claim 2, wherein the reconfigurable logic device is an FPGA.

4. A network interface device as claimed in any of claims 1 to 3, further comprising a layer 2 processing unit connected between the device transport engine and the physical layer signalling unit, the layer 2 processing unit being arranged to perform layer 2 processing of data packets communicated over the network.

5. A network interface device as claimed in any of claims 1 to 4, wherein the device application is arranged to consume the payload data received over the first transport stream and the transport stream state received at the device transport engine permits the device transport engine to perform receive transport processing for the first transport stream.

6. A network interface device as claimed in claim 5, wherein the device transport engine is configured to perform validation of one or more checksums of a data packet received over the first transport stream and to:
begin forwarding the payload of the data packet to the device application irrespective of whether validation of the one or more checksums of the data packet has completed; and
on completion of validation of the one or more checksums, signal to the device application if checksum validation fails.

7. A network interface device as claimed in claim 6, wherein the device transport engine is configured to forward the payload of the data packet to the device application by streaming the payload to the device application as the payload of the data packet is received at the device transport engine.

8. A network interface device as claimed in claim 6 or 7, wherein the device transport engine is configured to, on completion of validation of the one or more checksums, forward a payload-received message to a predetermined network endpoint to indicate that the received data packet has been successfully processed, the payload-received message including the headers of the received data packet but not its payload.

9. A network interface device as claimed in any of claims 1 to 8, wherein the device application is arranged to generate the payload data for the first transport stream and the transport stream state passed to the device transport engine permits the device transport engine to perform transmit transport processing for the first transport stream.

10. A network interface device as claimed in claim 9, wherein the transport stream state includes state indicative of the maximum data packet sequence number snd_max that the device transport engine is permitted to transmit over the first transport stream.

11. A network interface device as claimed in claim 9 or 10, wherein the device application is configured to, on generating payload data for the first transport stream, pass the payload data to the device transport engine, and the device transport engine being configured to in response:
form a transport data packet comprising the payload data and transport protocol headers, the transport protocol headers including a transport checksum calculated over the payload data and one or more fields of the transport protocol headers; and
cause the transport data packet to be transmitted over the first transport stream and forwarded to a predetermined network endpoint.

12. A network interface device as claimed in claim 11, wherein the device application is configured to calculate a checksum over the payload data and pass that checksum to the device transport engine with the payload data, and the device transport engine is configured to calculate the transport checksum from the checksum over the payload data passed to it by the device application and commence transmission of the transport data packet over the first transport irrespective of whether all of the payload data has been received.

13. A network interface device as claimed in claim 11 or 12 when dependent on claim 10, wherein the device transport engine is configured to, on forming a transport data packet whose sequence number would exceed snd_max, cause that transport data packet to be transmitted to the predetermined network endpoint but not over the first transport stream.

14. A method of performing transport protocol processing at a pair of transport engines (105, 107) comprising:
in software at a host transport engine (105):
establishing a transport stream over a network (103) with a remote peer;
forming state information for the transport stream; and
passing sufficient state information for the transport stream to a device transport engine (107) so as to permit the device transport engine (107) to perform transport processing of the transport stream;
and in hardware, of a network interface device (102) according to any of claims 1 to 13, at the device transport engine (107):
performing transport processing of the transport stream on behalf of a device application (109) provided at the hardware of the network interface device (102).

## Patentansprüche

1. Netzwerkschnittstellenvorrichtung (102), die konfiguriert ist, um über eine Schnittstelle zwischen einem Netzwerk und einer Host-Computervorrichtung zu verbinden, wobei die Netzwerkschnittstellenvorrichtung aufweist:
eine Signalisierungseinheit einer physikalischen Schicht zur Verbindung mit einem Netzwerk (103);
eine Vorrichtungsanwendung (109), die konfiguriert ist, um einen ersten Transportstrom zu beenden, sodass Nutzlastdaten des ersten Transportstroms entweder von der Vorrichtungsanwendung stammen oder von ihr verbraucht werden; und
eine Vorrichtungstransportmaschine (107), die durch die Signalisierungseinheit der physikalischen Schicht an das Netzwerk (103) hardwaregekoppelt ist und konfiguriert ist, um eine Transportverarbeitung des ersten Transportstroms im Namen der Vorrichtungsanwendung (109) als Reaktion auf Empfangen einer Nachricht von einer Host-Transportmaschine der Host-Computervorrichtung durchzuführen, die angibt, dass die Vorrichtungstransportmaschine (107) zugelassen ist, eine Transportverarbeitung des ersten Transportstroms durchzuführen, wobei die Nachricht einen Transportstromzustand aufweist, der ausreichend ist, um der Vorrichtungstransportmaschine (107) zu ermöglichen, eine Transportverarbeitung des ersten Transportstroms durchzuführen.

2. Netzwerkschnittstellenvorrichtung nach Anspruch 1, bei welcher die Vorrichtungsanwendung und die Vorrichtungstransportmaschine in ein oder mehr rekonfigurierbaren Logikvorrichtungen verkörpert sind.

3. Netzwerkschnittstellenvorrichtung nach Anspruch 2, bei welcher die rekonfigurierbare Logikvorrichtung ein FPGA ist.

4. Netzwerkschnittstellenvorrichtung nach einem der Ansprüche 1 bis 3, ferner aufweisend eine Schicht 2 - Verarbeitungseinheit, die zwischen der Vorrichtungstransportmaschine und der Signalisierungseinheit der physikalischen Schicht verbunden ist, wobei die Schicht 2 - Verarbeitungseinheit eingerichtet ist, um ein Schicht 2 - Verarbeiten von über das Netzwerk kommunizierten Datenpaketen durchzuführen.

5. Netzwerkschnittstellenvorrichtung nach einem der Ansprüche 1 bis 4, bei welcher die Vorrichtungsanwendung eingerichtet ist, um die Nutzlastdaten zu konsumieren, die über den ersten Transportstrom empfangen werden, und der an der Vorrichtungstransportmaschine empfangene Transportstromzustand der Vorrichtungstransportmaschine zulässt, ein Empfangstransportverarbeiten für den ersten Transportstrom durchzuführen.

6. Netzwerkschnittstellenvorrichtung nach Anspruch 5, bei welcher die Vorrichtungstransportmaschine konfiguriert ist, um eine Validierung von ein oder mehr Prüfsummen eines über den ersten Transportstrom empfangenen Datenpakets durchzuführen und um:
ein Weiterleiten der Nutzlast des Datenpakets an die Vorrichtungsanwendung unabhängig davon zu beginnen, ob die Validierung der ein oder mehr Prüfsummen des Datenpakets abgeschlossen ist; und
nach Abschluss der Validierung der ein oder mehr Prüfsummen, an die Vorrichtungsanwendung zu signalisieren, wenn die Prüfsummenvalidierung fehlschlägt.

7. Netzwerkschnittstellenvorrichtung nach Anspruch 6, bei welcher die Vorrichtungstransportmaschine konfiguriert ist, um die Nutzlast des Datenpakets an die Vorrichtungsanwendung durch Streamen der Nutzlast an die Vorrichtungsanwendung weiterzuleiten, wenn die Nutzlast des Datenpakets an der Vorrichtungstransportmaschine empfangen wird.

8. Netzwerkschnittstellenvorrichtung nach Anspruch 6 oder 7, bei welcher die Vorrichtungstransportmaschine konfiguriert ist, um nach Abschluss der Validierung der ein oder mehr Prüfsummen eine Nutzlast-empfangene Nachricht an einen vorbestimmten Netzwerkendpunkt weiterzuleiten, um anzuzeigen, dass das empfangene Datenpaket erfolgreich verarbeitet worden ist, wobei die Nutzlast-empfangene Nachricht die Header des empfangenen Datenpakets, aber nicht seine Nutzlast enthält.

9. Netzwerkschnittstellenvorrichtung nach einem der Ansprüche 1 bis 8, bei welcher die Vorrichtungsanwendung eingerichtet ist, um die Nutzlastdaten für den ersten Transportstrom zu erzeugen, und der an die Vorrichtungstransportmaschine weitergegebene Transportstromzustand die Vorrichtungstransportmaschine zulässt, ein Übertragungstransportverarbeiten für den ersten Transportstrom durchzuführen.

10. Netzwerkschnittstellenvorrichtung nach Anspruch 9, bei welcher der Transportstromzustand einen Zustand enthält, der die maximale Datenpaketfolgenummer snd_max angibt, die die Vorrichtungstransportmaschine über den ersten Transportstrom zu übertragen zugelassen ist.

11. Netzwerkschnittstellenvorrichtung nach Anspruch 9 oder 10, bei welcher die Vorrichtungsanwendung konfiguriert ist, um beim Erzeugen von Nutzlastdaten für den ersten Transportstrom die Nutzlastdaten an die Vorrichtungstransportmaschine weiterzuleiten, und bei welcher die Vorrichtungstransportmaschine konfiguriert ist, um als Reaktion darauf:
ein Transportdatenpaket zu bilden, das die Nutzlastdaten und Transportprotokoll-Header aufweist, wobei die Transportprotokoll-Header eine Transportprüfsumme enthalten, die über die Nutzlastdaten und ein oder mehr Felder der Transportprotokoll-Header berechnet wird; und
zu veranlassen, dass das Transportdatenpaket über den ersten Transportstrom übertragen wird und an einen vorbestimmten Netzendpunkt weitergeleitet wird.

12. Netzwerkschnittstellenvorrichtung nach Anspruch 11, bei welcher die Vorrichtungsanwendung konfiguriert ist, um eine Prüfsumme über die Nutzlastdaten zu berechnen und diese Prüfsumme an die Vorrichtungstransportmaschine mit den Nutzlastdaten weiterzuleiten, und die Vorrichtungstransportmaschine konfiguriert ist, um die Transportprüfsumme von der Prüfsumme über die ihr von der Vorrichtungsanwendung weitergegebenen Nutzlastdaten zu berechnen und die Übertragung des Transportdatenpakets über den ersten Transport unabhängig davon zu beginnen, ob alle Nutzlastdaten empfangen worden sind.

13. Netzwerkschnittstellenvorrichtung nach Anspruch 11 oder 12, wenn abhängig von Anspruch 10, bei welcher die Vorrichtungstransportmaschine konfiguriert ist, um beim Bilden eines Transportdatenpakets, dessen Sequenznummer snd_max überschreiten würde, zu veranlassen, dass dieses Transportdatenpaket an den vorbestimmten Netzwerkendpunkt, aber nicht über den ersten Transportstrom übertragen wird.

14. Verfahren zum Durchführen einer Transportprotokollverarbeitung an einem Paar von Transportmaschinen (105, 107), aufweisend:
in Software an einer Host-Transportmaschine (105):
Einrichten eines Transportstroms über ein Netzwerk (103) mit einem entfernten Peer;
Bilden von Zustandsinformationen für den Transportstrom; und
Übergeben ausreichender Zustandsinformationen für den Transportstrom an eine Vorrichtungstransportmaschine (107), um es der Vorrichtungstransportmaschine (107) zuzulassen, ein Transportverarbeiten des Transportstroms durchzuführen;
und in Hardware einer Netzwerkschnittstellenvorrichtung (102) nach einem der Ansprüche 1 bis 13 an der Vorrichtungstransportmaschine (107):
Durchführen eines Transportverarbeitens des Transportstroms im Namen einer Vorrichtungsanwendung (109), die an der Hardware der Netzwerkschnittstellenvorrichtung (102) vorgesehen ist.

## Revendications

1. Dispositif d'interface de réseau (102) configuré pour servir d'interface entre un réseau et un dispositif informatique hôte, le dispositif d'interface de réseau comprenant :
une unité de signalisation de couche physique servant à la connexion à un réseau (103) ;
une application de dispositif (109) configurée pour terminer un premier flux de transport, de telle sorte que des données de charge utile du premier flux de transport soit proviennent de, soit sont consommées par, l'application de dispositif ; et
un moteur de transport de dispositif (107) dans un matériel informatique, qui est couplé au réseau (103) par l'unité de signalisation de couche physique et configuré pour effectuer un traitement de transport du premier flux de transport pour le compte de l'application de dispositif (109) en réponse à la réception d'un message provenant d'un moteur de transport hôte du dispositif informatique hôte et indiquant que le moteur de transport de dispositif (107) est autorisé à effectuer un traitement de transport du premier flux de transport, le message comprenant un état de flux de transport qui est suffisant pour permettre au moteur de transport de dispositif (107) d'effectuer un traitement de transport du premier flux de transport.

2. Dispositif d'interface de réseau selon la revendication 1, dans lequel l'application de dispositif et le moteur de transport de dispositif sont incorporés dans un ou plusieurs dispositifs logiques reconfigurables.

3. Dispositif d'interface de réseau selon la revendication 2, dans lequel le dispositif logique reconfigurable est un FPGA.

4. Dispositif d'interface de réseau selon l'une quelconque des revendications 1 à 3, comprenant en outre une unité de traitement de couche 2, laquelle est connectée entre le moteur de transport de dispositif et l'unité de signalisation de couche physique, l'unité de traitement de couche 2 étant agencée pour effectuer un traitement de couche 2 de paquets de données communiqués via le réseau.

5. Dispositif d'interface de réseau selon l'une quelconque des revendications 1 à 4, dans lequel l'application de dispositif est agencée pour consommer les données de charge utile reçues via le premier flux de transport, et dans lequel l'état de flux de transport reçu au niveau du moteur de transport de dispositif permet au moteur de transport de dispositif d'effectuer un traitement de transport de réception destiné au premier flux de transport.

6. Dispositif d'interface de réseau selon la revendication 5, dans lequel le moteur de transport de dispositif est configuré pour effectuer une validation d'une ou plusieurs somme(s) de contrôle d'un paquet de données reçu via le premier flux de transport, et configuré pour :
commencer à transférer la charge utile du paquet de données à l'application de dispositif indépendamment du fait que la validation de la ou les somme(s) de contrôle du paquet de données soit achevée ou non ; et
à l'achèvement de la validation de la ou les somme(s) de contrôle, signaler à l'application de dispositif si la validation de la somme de contrôle a échoué.

7. Dispositif d'interface de réseau selon la revendication 6, dans lequel le moteur de transport de dispositif est configuré pour transférer la charge utile du paquet de données à l'application de dispositif en transmettant en continu la charge utile à l'application de dispositif lorsque la charge utile du paquet de données est reçue au niveau du moteur de transport de dispositif.

8. Dispositif d'interface de réseau selon la revendication 6 ou 7, dans lequel le moteur de transport de dispositif est configuré pour, à la fin de la validation de la ou les somme(s) de contrôle, transférer un message de reçu de charge utile à un point d'extrémité de réseau prédéterminé pour indiquer que le paquet de données reçu a été traité avec succès, le message de reçu de charge utile incluant les en-têtes du paquet de données reçu mais pas sa charge utile.

9. Dispositif d'interface de réseau selon l'une quelconque des revendications 1 à 8, dans lequel l'application de dispositif est agencée pour générer les données de charge utile pour le premier flux de transport, et dans lequel l'état de flux de transport transmis au moteur de transport de dispositif permet au moteur de transport de dispositif d'effectuer un traitement de transport de transmission destiné au premier flux de transport.

10. Dispositif d'interface de réseau selon la revendication 9, dans lequel l'état de flux de transport inclut un état indicatif du numéro de séquence de paquet de données maximales snd_max que le moteur de transport de dispositif est autorisé à transmettre via le premier flux de transport.

11. Dispositif d'interface de réseau selon la revendication 9 ou 10, dans lequel l'application de dispositif est configurée pour, lors de la génération de données de charge utile pour le premier flux de transport, faire passer les données de charge utile au moteur de transport de dispositif, et en réponse, le moteur de transport de dispositif étant configuré pour :
former un paquet de données de transport comprenant les données de charge utile et les en-têtes de protocole de transport, les en-têtes de protocole de transport incluant une somme de contrôle de transport calculée sur les données de charge utile et sur un ou plusieurs champs des en-têtes de protocole de transport ; et
provoquer la transmission du paquet de données de transport via le premier flux de transport et son transfert vers un point d'extrémité de réseau prédéterminé.

12. Dispositif d'interface de réseau selon la revendication 11, dans lequel l'application de dispositif est configurée pour calculer une somme de contrôle sur les données de charge utile et pour faire passer cette somme de contrôle au moteur de transport de dispositif avec les données de charge utile, et dans lequel le moteur de transport de dispositif est configuré pour calculer la somme de contrôle de transport à partir de la somme de contrôle sur les données de charge utile transmises à lui par l'application de dispositif et pour commencer une transmission du paquet de données de transport via le premier transport indépendamment du fait que toutes les données de charge utile aient été reçues ou non.

13. Dispositif d'interface de réseau selon la revendication 11 ou 12 lorsqu'en dépendance de la revendication 10, dans lequel le moteur de transport de dispositif est configuré, lors de la formation d'un paquet de données de transport dont le numéro de séquence dépasserait snd_max, pour provoquer la transmission de ce paquet de données de transport au point d'extrémité de réseau prédéterminé mais pas via le premier flux de transport.

14. Procédé pour effectuer un traitement de protocole de transport au niveau d'une paire de moteurs de transport (105, 107) consistant à :
dans un logiciel au niveau d'un moteur de transport hôte (105) :
établir un flux de transport via un réseau (103) avec un homologue distant ;
former des informations d'état pour le flux de transport ; et
faire passer des informations d'état suffisantes pour le flux de transport à un moteur de transport de dispositif (107) afin de permettre au moteur de transport de dispositif (107) d'effectuer un traitement de transport du flux de transport ;
et dans un matériel informatique, d'un dispositif d'interface de réseau (102) selon l'une quelconque des revendications 1 à 13, au niveau du moteur de transport de dispositif (107) :
effectuer un traitement de transport du flux de transport pour le compte d'une application de dispositif (109) fournie au niveau du matériel informatique du dispositif d'interface de réseau (102).
